# EUROPEAN PATENT APPLICATION

(11) **EP 2 975 488 A1**
(43) Date of publication of application: **20.01.2016**
(21) Application number: 14177048.7
(22) Date of filing: 15.07.2014
(51) Int. Cl.: G06F 1/16, B60R 11/02, H04M 1/04, H04B 1/08, H04N 21/414

(54) **Portable device cradle with built-in electronic system**

(71) Applicant: Fan, Eagle, Hsinchu (TW)
(72) Inventor: Fan, Eagle, Hsinchu (TW)
(74) Representative: Gee, Steven William

(57) **Abstract**

A portable device cradle with built-in electronic system is disclosed, including a cradle and an electronic system housed inside the cradle. The cradle includes a base and at least two clamping elements, wherein the base has a surface, and the at least two clamping elements are disposed on and extend from two opposite sides of the base, wherein at least one of the two clamping elements moves towards or away from the other so as to clamp or release a portable device. The electronic system includes: a printed circuit board; an antenna module that receives at least a data signal; a hardware data processor that processes the data signal into data of a plurality of formats; and a hardware access module that includes at least a communication unit. As such, the hardware data processor transmits processed data through communication unit to an external device to play processed data.

## Description

### FIELD OF THE INVENTION

The present invention generally relates to a portable device cradle with built-in electronic system.

### BACKGROUND OF THE INVENTION

As portable electronic devices become ubiquitous, a wide range of applications of portable electronic devices is developed for use in a car. Consequently, various accessory apparatuses are designed and manufactured. For example, a portable device cradle is developed to hold a portable electronic device inside a car so that the driver will not be distracted by hand-holding the electronic device, such as, when using a smart phone with GPS navigation capability when driving.

On the other hand, vehicular mobile communication has been long gaining attention. Digital audio broadcast (DAB) devices, as well as other recent progress in vehicular mobile communication protocols and devices, such as 802.11P/ETSI G5, Transport Protocol Experts Group (TPEG), and so on, are also increasing presence inside a car. As more and more portable electronic devices are competing for limited space inside a car, it is imperative to devise mechanism able to utilize the space efficiently while making various functions stay available for the convenience of the driver.

### SUMMARY OF THE INVENTION

The primary object of the present disclosure is to provide a portable device cradle with built-in electronic system.

An exemplary embodiment discloses a portable device cradle with built-in electronic system, which comprises: a cradle and an electronic system housed inside the cradle. The cradle further comprises a base and at least two clamping elements, wherein the base has a surface where a portable device is placed on, and the at least two clamping elements are disposed on the base and extend from two opposite sides of the base, wherein at least one of the at least two clamping elements moves towards or away from the other clamping element so as to clamp or release the portable device. The electronic system, which is housed inside the base of the cradle, further comprises: a printed circuit board, an antenna module, a hardware data processor, and a hardware access module; wherein the antenna module is electrically connected to the printed circuit board, the antenna module receives at least a data signal and further comprises a low-noise amplifier unit; the hardware data processor is electrically connected to the printed circuit board, the hardware data processor processes the at least a data signal received by the antenna module into data of a plurality of formats; and the hardware access module is electrically connected to the printed circuit board, the hardware access module comprises at least a communication unit, the hardware data processor transmits the processed data through the communication unit of the hardware access module to at least an external device so that the external device accesses, plays and/or displays the processed data.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

The present invention can be understood in more detail by reading the subsequent detailed description in conjunction with the examples and references made to the accompanying drawings, wherein:
FIG. 1 shows a schematic view of the structure of an embodiment of a cradle with built-in electronic system according to the present disclosure; and
FIG. 2 shows a schematic view of the structure of another embodiment of a cradle with built-in electronic system according to the present disclosure.

### DETAILED DESCRIPTION OF THE PREFERRED EMBODIMENTS

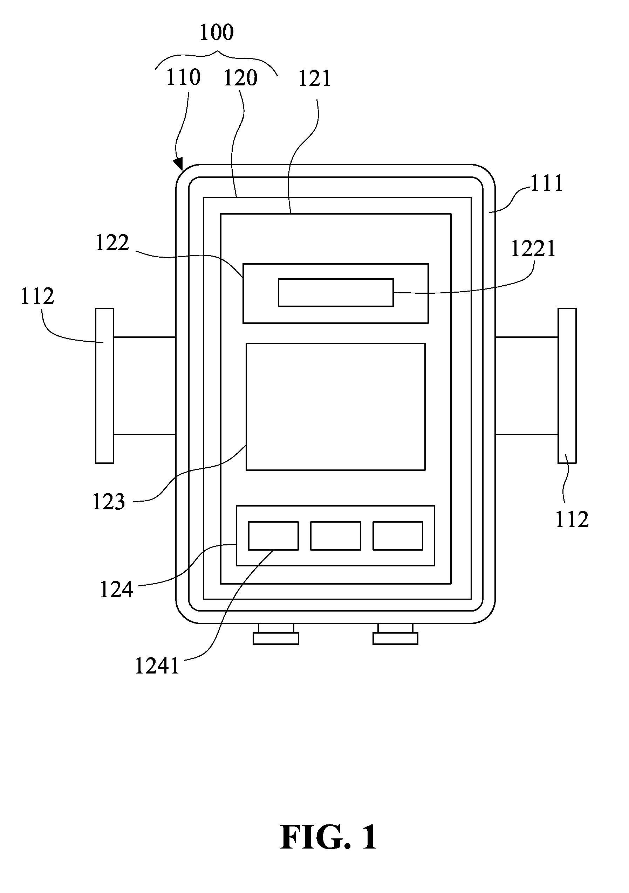

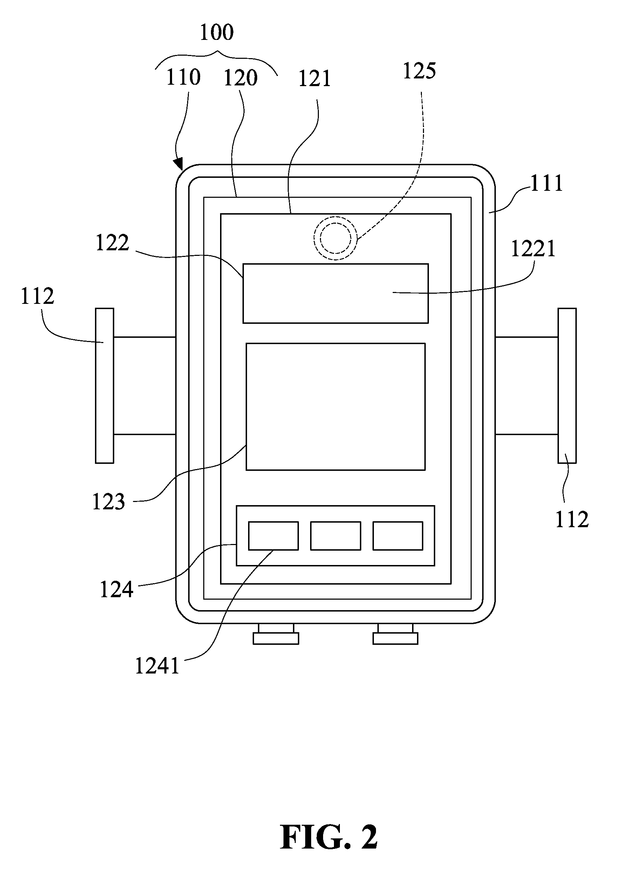

FIG. 1 shows a schematic view of a portable device cradle with built-in electronic system according to an embodiment of the present disclosure. As shown in FIG. 2, a portable device cradle 100 with built-in electronic system comprises: a cradle 110 and an electronic system 120 housed inside the cradle 110. It should be noted that the electronic system 120 housed inside the cradle 110 is concealed and not visible from the appearance of the portable device cradle 100. The visibility of the electronic system 120 depicted in FIG. 1 is only for description purpose. The cradle 110 further comprises a base 111 and at least two clamping elements 112, wherein the base 111 has a surface where a portable device is placed on, and the at least two clamping elements 112 are disposed on the base 111 and extend from two opposite sides of the basel 111, wherein at least one of the at least two clamping elements 112 moves towards or away from the other clamping element 112 so as to clamp or release the portable device placed on the surface of the base 111. The electronic system 120, which is housed inside the base 111 of the cradle 110, further comprises: a printed circuit board (PCB) 121, an antenna module 122, a hardware data processor 123, and a hardware access module 124. The antenna module 122 is electrically connected to the printed circuit board 121, and receives at least a data signal. The antenna module 122 further comprises a low-noise amplifier unit 1221. The hardware data processor 123 is electrically connected to the printed circuit board 121, and processes the at least a data signal received by the antenna module 122 into data of a plurality of formats. The hardware access module 124 is electrically connected to the printed circuit board 121. The hardware access module 124 comprises at least a communication unit 1241, and the hardware data processor 123 transmits the processed data through the communication unit 1241 of the hardware access module 124 to at least an external device so that the external device accesses, plays and/or displays the processed data.

It should be noted that in another embodiment, the electronic system 120 may further comprise a camera module 125 electrically connected to the printed circuit board 121. The camera module 125 comprises a lens located at the back of the base 111 of the cradle 110. The camera module 125 captures image data signals and transmits the captured image data signals to the hardware data processor 123.

It should also be noted the at least a data signal received by the antenna module 122 may include, but not restricted to, a digital audio broadcasting signal, a traffic and travel information signal, and so on. Accordingly, the hardware data processor 123 should be disposed with corresponding elements with functions to process such data signals into data of various formats for access, playing or displaying by various external devices connected to the electronic system 120 through the hardware access module 124. For example, the hardware data processor 123 may include an audio and slide decoder when a digital audio broadcasting signal is received by the antenna. Similarly, the communication unit 1241 of the hardware access module 124 may be, but not restricted to, an AUX-in jack, a Bluetooth interface unit, an 802.11B/G/P, an FM transceiver, an USB, and so on, for connecting a range of various external devices.

For example, when the at least a data signal received by the antenna module 122 comprises a digital audio broadcasting signal, the hardware data processor 123 further comprises an audio and slide decoder, and the hardware access module 124 comprises a wired audio AUX-in jack to connected to a car radio. For another example, when the at least a data signal comprises a traffic and travel information signal, and the hardware data processor 123 further comprises a traffic and travel information decoder.

FIG. 2 shows a schematic view of the structure of another embodiment of a cradle with built-in electronic system according to the present disclosure. In the embodiment, the electronic system 120 further comprises a camera module 125, the hardware data processor 123 further comprises an image processor to process image data signals captured by the camera module 125. It should be noted that the camera module is disposed at the back of the base 111 so that the camera will not be blocked when a portable device is placed and clamped by the cradle.

In summary, the portable device cradle with built-in electronic system of the present disclosure can hold a variety of portable electronic devices, with the built-in electronic system to receive, process and output a variety of signals for access by the held portable electronic device or various external devices inside a car.

An exemplary embodiment of the present disclosure provides a portable device cradle with built-in electronic system, which comprises: a cradle and an electronic system housed inside the cradle. The cradle further comprises a base and at least two clamping elements, wherein the base has a surface where a portable device is placed on, and the at least two clamping elements are disposed on the base and extend from two opposite sides of the base, wherein at least one of the at least two clamping elements moves towards or away from the other clamping element so as to clamp or release the portable device. The electronic system, which is housed inside the base of the cradle, further comprises: a printed circuit board, an antenna module, a hardware data processor, and a hardware access module; wherein the antenna module is electrically connected to the printed circuit board, the antenna module receives at least a data signal and further comprises a low-noise amplifier unit; the hardware data processor is electrically connected to the printed circuit board, the hardware data processor processes the at least a data signal received by the antenna module into data of a plurality of formats; and the hardware access module is electrically connected to the printed circuit board, the hardware access module comprises at least a communication unit, the hardware data processor transmits the processed data through the communication unit of the hardware access module to at least an external device so that the external device accesses, plays and/or displays the processed data.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A portable device cradle with built-in electronic system, comprising:
a cradle, further comprising a base and at least two clamping elements, wherein the base has a surface where a portable device is placed on, and the at least two clamping elements are disposed on the base and extend from two opposite sides of the base, wherein at least one of the at least two clamping elements moves towards or away from the other clamping element so as to clamp or release the portable device; and
an electronic system, housed inside the base of the cradle, further comprising:
a printed circuit board;
an antenna module, electrically connected to the printed circuit board, the antenna module receives at least a data signal and further comprise a low-noise amplifier unit;
a hardware data processor, electrically connected to the printed circuit board, the hardware data processor processes the at least a data signal received by the antenna module into data of a plurality of formats; and
a hardware access module, electrically connected to the printed circuit board, the access module comprises at least a communication unit, the hardware data processor transmits the processed data to at least an external device so that the external device accesses, plays and/or displays the processed data.

2. The portable device cradle with built-in electronic system as claimed in claim 1, wherein the electronic system further comprises a camera module electrically connected to the printed circuit board and comprising a lens located at the back of the base of the cradle, the camera module captures image data signals and transmits the captured image data signals to the hardware data processor.

3. The portable device cradle with built-in electronic system as claimed in claim 2, wherein the at least a data signal comprises a digital audio broadcasting signal, the hardware data processor further comprises an audio and slide decoder, and the access module comprises a wired audio AUX-in jack to connected to a car radio.

4. The portable device cradle with built-in electronic system as claimed in claim 2, wherein the at least a data signal comprises a traffic and travel information signal, and the hardware data processor further comprises a traffic and travel information decoder.

5. The portable device cradle with built-in electronic system as claimed in claim 2, wherein the hardware data processor further comprises an image processor to process image data signals captured by the camera module.

6. The portable device cradle with built-in electronic system as claimed in claim 2, wherein the access module further comprises a Bluetooth communication module.

7. The portable device cradle with built-in electronic system as claimed in claim 2, wherein the access module further comprises an 802.11B/G/P communication module.
